# EUROPÄISCHE PATENTSCHRIFT

(11) **EP 3 051 099 B1**
(45) Veröffentlichungstag und Bekanntmachung des Hinweises auf die Patenterteilung: **08.11.2017**
(21) Anmeldenummer: 15199551.1
(22) Anmeldetag: 11.12.2015
(51) Int. Cl.: F02B 37/22, F01D 17/14, F04D 27/00, F04D 29/42, F04D 29/44, F04D 29/46, F02M 26/06, F02M 26/09, F04D 27/02, F02B 37/10, F02B 39/10

(54) **VERDICHTER MIT VARIABLER ANSTRÖMGEOMETRIE**
COMPRESSOR WITH VARIABLE FLOW GEOMETRY
COMPRESSEUR À GÉOMETRIE D'ÉCOULEMENT VARIABLE

(30) Priorität: 02.02.2015 DE 102015201768; 27.05.2015 DE 102015209704
(43) Veröffentlichungstag der Anmeldung: 03.08.2016
(73) Patentinhaber: Volkswagen Aktiengesellschaft, 38440 Wolfsburg (DE)
(72) Erfinder: Alberti, Peter, Dr., 38553 Wasbüttel (DE); Hinrichs, Oliver, 31226 Peine (DE); Kammeyer, Jasper, 30169 Hannover (DE); Greiner, Michael, 39116 Magdeburg (DE); Frerichs, Simon, 26655 Westerstede (DE); Werner, Ronny, 01612 Glaubitz (DE); Kleinen, Marcus, 04668 Grimma (DE)

(56) Entgegenhaltungen:
- WO-A1-2015/001644
- DE-A1-102013 003 418
- DE-U1-202014 102 773

## Beschreibung

Die Erfindung betrifft eine Verdichteranordnung mit einem Verdichterlaufrad, einem stromauf des Verdichterlaufrads angeordneten Anströmkanal und einer Einstellvorrichtung zum Verändern eines Strömungsquerschnitts des Anströmkanals stromauf des Verdichterlaufrads wie etwa einem Trimsteller, gemäß dem Oberbegriff des Patentanspruchs 1. Eine solche Verdichteranordnung ist als Teil eines Abgasturboladers für eine Brennkraftmaschine einsetzbar.

Zur Senkung des Kraftstoffverbrauchs, aber auch zur Erhöhung der Abgasrückführungsrate, werden bei Brennkraftmaschinen, wie etwa Diesel- und Ottomotoren, Abgasturbolader eingesetzt. Mit einem Verdichter des Abgasturboladers wird das über den Frischgasstrang der Brennkraftmaschine zugeführte Frischgas verdichtet. Um die Variabilität und das Ansprechverhalten von Turboladern zu verbessern, kommen regelmäßig variable Turbinengeometrien (VTG) zum Einsatz. Eine variable Verdichtergeometrie erhöht als weitere Technologie die Variabilität des Aufladesystems.

Mit dem steigenden Aufladegrad moderner Verbrennungsmotoren steigen auch die Anforderungen an den Betriebsbereich (Kennfelder) der Abgasturbolader. Hintergrund sind die Anforderungen des Verbrennungsmotors, bereits bei möglichst niedrigen Motordrehzahlen das maximale Drehmoment zu erreichen, bei gleichzeitig stetig ansteigender Nennleistung. Insbesondere bei mono-turboaufgeladenen Verbrennungsmotoren muss der Turbolader dabei bereits bei niedrigen Luftmassenströmen hohe Ladedrücke gewährleisten (Bereich der Pumpgrenze) und gleichzeitig den hohen Luftmassenstrom bei Nennleistung mit den geforderten Ladedrücken ermöglichen. Herkömmliche Turbolader kommen im Rahmen dieser Anforderungen schnell an ihre Grenzen bezüglich der möglichen Betriebsbereichsspreizung (Kennfeldbreite) der Verdichter- und Turbinenstufe. Die oben beschriebene VTG-Technologie wird bereits in vielen Anwendungen auf der Turbinenseite eingesetzt, um einen möglichst breiten Betriebsbereich der Turbinenstufe zu ermöglichen. Auch auf der Verdichterseite gibt es bereits zahlreiche Ansätze, durch Variabilitäten den Betriebsbereich der Verdichterstufe zu erweitern. In bisherigen Konzepten wurde mittels einer Vorleiteinrichtung der dem Verdichterlaufrad zugeführten Frischluft ein Drall aufgeprägt, welcher den Eintrittswinkel der Luftströmung auf das Verdichterlaufrad bzw. Schaufelrad verbessert. Diese Maßnahme wirkt Strömungsablösungen bei niedrigen Massenströmen entgegen.

Zur Darstellung großer Zylinderfüllungen und Motordrehmomente ist ein kleiner Verdichtertrim notwendig und zur Darstellung von hohen Motorleistungen bei Nenndrehzahl ein großer Verdichtertrim. Aus diesem Grund kann es vorteilhaft sein, einen Anströmkanal mit Trimvariabilität vorzusehen. Eine Einstellvorrichtung wie etwa ein Trimsteller dient dabei der Verschiebung der Pumpgrenze eines Verdichterkennfelds in Richtung niedriger Massenströme bei hohen Druckverhältnissen. Gleichzeitig kann ein Trimsteller im Bereich der Pumpgrenze einen Anstieg des Verdichterwirkungsgrads bewirken. Hierzu umfasst ein Trimsteller eine Einstellvorrichtung, durch die der Anströmquerschnitt, in dem das Laufrad des Verdichters angeströmt wird, bzw. der Strömungsquerschnitt des Anströmkanals vor dem Laufrad veränderbar ist. Durch die so erreichte Düsenwirkung des Trimstellers kann mit zunehmendem Regeleingriff (Verkleinerung des Strömungsquerschnitts) die Verdichteranströmung stärker auf den nabennahen Strömungsquerschnitt des Verdichterlaufrads fokussiert werden. Dadurch strömt weniger Fluid in den impulsarmen und verlustbehafteten Bereich der Rückströmblase und die Kernströmung im nabennahen Bereich wird beschleunigt und dadurch zusätzlich stabilisiert. Die Beschleunigung der Strömung im nabennahen Bereich des Verdichters hat zusätzlich eine saugseitige Verschiebung der Verdichteranströmung zur Folge, was zu einer weiteren Stabilisierung der Strömung beitragen kann. Die Stabilisierung der Kernströmung führt zu der gewünschten Verschiebung der Pumpgrenze des Verdichterkennfelds zu geringeren Massenströmen. Bei nicht gewünschtem Regeleingriff (Trimsteller vollständig geöffnet) wird möglichst der gesamte Querschnitt des Anströmkanals des Frischgasstrangs vor dem Verdichter freigegeben, so dass in der Laufrad-Anströmung möglichst keine zusätzlichen Reibungs- oder Drosselverluste entstehen. Der Verdichterwirkungsgrad und die Breite des Verdichterkennfelds werden deshalb in Richtung der Stopfgrenze nicht wesentlich negativ durch den Trimsteller beeinflusst.

Eine gattungsgemäße Brennkraftmaschine ist aus der DE 10 2010 026 176 A1 bekannt. Der dortige Trimsteller umfasst einen Konus, der in einer Ausführungsform aus einer Mehrzahl von Lamellen besteht. Die Lamellen sind in zwei Schichten angeordnet, wobei die Lamellen jeder Schicht zueinander beabstandet und die zwei Schichten zueinander rotatorisch versetzt sind, so dass die Lamellen einer Schicht die Abstände zwischen den Lamellen der jeweiligen anderen Schicht überdecken. Mittels eines in längsaxialer Richtung verschiebbaren, die Lamellen außenseitig umgebenden Rings können die den Austrittsquerschnitt des Konus ausbildenden Enden der Lamellen radial verschoben werden. Dadurch verändert sich die Größe des Austrittsquerschnitt und damit des Anströmquerschnitts, in dem das Laufrad des Verdichters angeströmt wird.

Die Druckschriften DE 10 2011 121 996 B4 und DE 10 2013 003 418 A1 beschreiben andere Möglichkeiten zum Verändern des Strömungsquerschnitts des Anströmkanals kurz vor dem Verdichterlaufrad mittels eines Trimstellers. Bekannte Ansätze von trimvariablen Verdichtern beinhalten einen Drehring, welcher über eine Nockenkontur im Kreis angeordnete Lamellen ansteuert. Diese Lamellen stellen allerdings einen Schwachpunkt bei der Dauerfestigkeit unter extremen Bedingungen dar; ferner ist die Zuverlässigkeit und Regelbarkeit der Lamellen im transienten Motorbetrieb fraglich.

Die Druckschrift DE 10 2013 006 928 A1 offenbart einen Abgasturbolader mit einer Turbinenanordnung mit veränderbarem Austrittsquerschnitt.

Die DE 20 2014 102 773 U1 offenbart einen Verdichter mit einem Einlasskanal, der in einem kurzen Abschnitt vor einem Verdichterlaufrad und in einem sich daran anschließenden Abschnitt, der das Verdichterlaufrad radial umgibt, mittels einer doppelwandigen, rohrförmigen Wandstruktur in einen zentralen Einlasskanal und einen den zentralen Einlasskanal umgebenden Drosselkanal unterteilt ist. Einlassseitig des Drosselkanals ist eine blendenförmige Einstellvorrichtung vorgesehen, durch die die Menge des über den Drosselkanal zu dem 240 strömenden Frischgases einstellbar ist. Dadurch soll ein "Kompressordrosseln" verhindert werden. In die doppelwandige, rohrförmige Wandstruktur ist weiterhin ein Rezirkulationskanal integriert, der einerseits eine schräg radial ausgerichtete Einlassöffnung, die im Bereich des radialen Umfangs des Verdichterlaufrads angeordnet ist, sowie eine radial ausgerichtete Auslassöffnung aufweist, die axial vor dem Verdichterlaufrad angeordnet ist. Mittels des Rezirkulationskanals soll die Pumpgrenze des Verdichters hinzu kleineren Massenströmen verschoben werden, indem bei einem Betrieb des Verdichters im Bereich der Pumpgrenze verdichtetes Frischgas in radialer Richtung von dem Verdichterlaufrad abströmt und über den Rezirkulationskanal in den zentralen Einlasskanal zurückgeführt wird.

In Anbetracht der beschriebenen Probleme ist es die Aufgabe der vorliegenden Erfindung, eine Verdichteranordnung mit Trimvariabilität bereitzustellen, die eine besonders einfache und zuverlässige Regelbarkeit des Anströmquerschnitts ermöglicht und eine höhere Dauerfestigkeit aufweist als die oben genannten Verdichteranordnungen aus dem Stand der Technik.

Diese Aufgabe wird erfindungsgemäß durch eine Verdichteranordnung der o.g. Art mit den in Anspruch 1 gekennzeichneten Merkmalen gelöst. Vorteilhafte Ausgestaltungen davon sind Gegenstand der abhängigen Patentansprüche und ergeben sich aus der nachfolgenden Beschreibung der Erfindung.

Die Einstellvorrichtung der erfindungsgemäßen Verdichteranordnung weist eine im Anströmkanal angeordnete Blende mit einer zentralen Blendenöffnung und mindestens einer weiteren Blendenöffnung in Form eines zumindest teilweise verschließbaren Blendenfensters auf. Anders als das Blendenfenster ist die zentrale Blendenöffnung nicht notwendigerweise verschließbar und bildet damit einen von dem Frischgas in Richtung auf das Verdichterlaufrad durchströmbaren und stets offenen Trimkanal, der eine zentrale Anströmung des Verdichterlaufrads ermöglicht.

Das mindestens eine Blendenfenster, das im Anströmkanal radial weiter außen als die zentrale Blendenöffnung angeordnet ist, ist zumindest teilweise, je nach Bedarf vorzugsweise auch vollständig verschließbar, so dass unter Aufrechterhaltung eines Mindest-Anströmquerschnitts durch die zentrale Blendenöffnung der Strömungsquerschnitt des Anströmkanals durch Öffnen oder Schließen des Blendenfensterns vergrößerbar oder verkleinerbar ist. Damit basiert die erfindungsgemäße Verdichteranordnung auf dem Wirkprinzip der Verengung des Verdichtereintrittsquerschnitts, wodurch die Strömungseintrittsgeschwindigkeit erhöht wird.

Die Erfindung geht auf die Erkenntnis zurück, dass komplex aufgebaute Trimsteller potentiell anfälliger für Störungen, etwa bei Extremtemperaturen und Verschmutzungen sind. Dagegen ist die erfindungsgemäße Einstellvorrichtung, die eine Blende mit mindestens zwei Öffnungen aufweist, nämlich der den zentralen Trimkanal bildenden zentralen Blendenöffnung und dem außermittig angeordneten verschließbaren Blendenfenster, besonders robust und damit stabil gegenüber Extrembelastungen. Im Hinblick auf einen einfachen und zweckmäßigen Aufbau umfasst die Blende vorzugsweise eine quer, insbesondere etwa senkrecht zur Strömungsrichtung im Anströmkanal verlaufende Anströmfläche, in der die Blendenfenster als Öffnungen gebildet sind. Blendenfenster sind mit einfachen Mitteln und stufenlos, je nach Bedarf, von der vollständig geöffneten Stellung in die vollständig geschlossenen Stellung verstellbar, so dass die erfindungsgemäße Verdichteranordnung besonders zuverlässig regelbar ist.

Im Hinblick auf eine verbesserte Variabilität und schnelle Regelbarkeit der Strömungsquerschnittsfläche des Anströmkanals hat es sich als vorteilhaft erwiesen, dass die Blende zwei, drei oder mehr, insbesondere etwa sechs vorzugsweise verschließbare Blendenfenster aufweist, die ringförmig um die zentrale Blendenöffnung herum angeordnet sind. Dabei ist die zentrale Blendenöffnung vorzugsweise kreisförmig und die Blendenfenster umlaufen sie jeweils im Wesentlichen kreisringsegmentförmig. In diesem Fall wird ein runder Querschnitt des Anströmkanals und des Verdichterlaufrads bestmöglich ausgenutzt. Zwischen den einzelnen Blendenöffnungen können jeweils Verbindungssegmente, wie etwa Stege, angeordnet sein, die die einzelnen Blendenfenster voneinander trennen.

Eine besonders vorteilhafte Anordnung der Blendenfenster ist dadurch ausgezeichnet, dass von den n (n>1) Blendenfenstern zwei benachbarte Blendenfenster jeweils einen Winkel von etwa 360°/n einschließen und/oder jedes Blendenfenster kreisringsegmentförmig mit einem Segmentwinkel von 360°/2n eingerichtet ist. Mit anderen Worten weisen korrespondierende Geometrien der benachbarten Blendenfenster einen Winkelabstand von 360°/n bezogen auf die Mittelachse der Einstellvorrichtung auf. Korrespondierende Geometrien sind beispielsweise die Blendenfenstermitten, die rechten Blendenfensterrahmen oder die linken Blendenfensterrahmen.

Eine schnelle und zuverlässige Regelbarkeit des Anströmquerschnitts durch Verschließen bzw. Öffnen der Blendenfenster kann dadurch bereitgestellt werden, dass die Blendenfenster bevorzugt gleichzeitig durch Verstellen, insbesondere durch Verdrehen, eines beweglichen Verschließteils wie etwa einer Ringscheibe gegenüber einem im Anströmkanal feststehenden Blendenabschnitt teilweise oder vollständig verschließbar oder öffenbar sind. Vorzugsweise ist das verdrehbare Verschließteil stromauf der Blende an einer im Wesentlichen ringförmigen, ebenen Anströmfläche der Blende angelegt, die die Blendenfenster aufweist, so dass es durch das anströmende Frischgas in Richtung der Anströmfläche gedrängt wird. Dadurch wird die Stabilität der Einstellvorrichtung insgesamt erhöht.

Gemäß einer besonders bevorzugten Ausführungsform der Erfindung ist das Verschließteil eine an dem feststehenden Blendenabschnitt anliegende, um die Längsachse des Anströmkanals drehbare Ringscheibe mit einer an die zentrale Blendenöffnung angepassten zentralen Ringöffnung und an die Blendenfenster angepassten, die zentrale Ringöffnung jeweils abschnittsweise umlaufenden Ringfenstern, die analog geformt sind wie die Blendenfenster. In der vollständig geöffneten Stellung der Einstellvorrichtung ist die Winkellage der Ringscheibe derart eingerichtet, dass sich die Blendenfenster im Wesentlichen mit den gleich geformten Ringfenstern überlagern, so dass alle Blendenfenster vollständig geöffnet sind. In der vollständig geschlossenen Stellung der Einstellvorrichtung, in der nur die den Trimkanal bildende zentrale Blendenöffnung geöffnet ist, ist die Winkellage der Ringscheibe derart eingerichtet, dass die Blendenfenster durch die Stege zwischen den Ringfenstern abgedeckt sind. Beliebige Zwischen-Winkelstellungen sind vorteilhafterweise möglich. In der vollständig geöffneten Stellung ermöglichen die Blendenfenster den Beibehalt der Stopfgrenze des Verdichters bei gleich hohen Durchsätzen, welche im Normalfall bei kleinerem Trim in Richtung kleinerer Durchsätze verschoben wird. Durch den Einsatz dieser Drehscheibe wird somit eine stufenlose Trimvariabilität des Verdichter-Eintritts ermöglicht. Die drehbare Scheibe hat die Vorteile der einfachen Umsetzbarkeit, einfachen Regelbarkeit, geringen Bauform und hohen Robustheit gegenüber Verschmutzungen, Vereisungen, etc.

Wie bereits oben angedeutet, wird durch die zentrale Blendenöffnung ein Trimkanal mit vergleichsweise kleinem Strömungsquerschnitt ausgebildet. Hierzu hat es sich als vorteilhaft erwiesen, dass die zentrale Blendenöffnung in Form eines zu einem zentralen Abschnitt des Verdichterlaufrads hin mündenden Rohrabschnitts gebildet ist. Mit anderen Worten weist die Blende stromab der zentralen Blendenöffnung einen Rohrabschnitt mit vorgegebenem, eingeschränktem Trimquerschnitt auf, durch den das Frischgas ggf. mit hoher Strömungsgeschwindigkeit in Richtung auf einen zentralen Abschnitt des Verdichterlaufrads geführt werden kann. Aufgrund der düsenförmigen Auslegung dieses Strömungskanals vor dem Verdichterlaufrad entstehen durch die sich im Anströmkanal befindlichen Bauteile kaum Druckverluste. Im geschlossenen Zustand der Blendenfenster ist der Strömungsquerschnitt auf den Querschnitt des Rohrabschnitts reduziert. Dies ermöglicht die Anhebung der Strömungsgeschwindigkeit und Senkung der wirksamen Umfangsgeschwindigkeit bei niedrigen Durchsätzen und dadurch eine Verschiebung der Pumpgrenze in Richtung niedriger Massenströme.

Besonders vorteilhaft ist die Ausgestaltung der Einstellvorrichtung, bei der zwischen einer Innenwand des Anströmkanals und einer Außenwand des Rohrabschnitts ein den Rohrabschnitt ringförmig umlaufender Zuschaltkanal gebildet ist, der durch das mindestens eine verschließbare Blendenfenster anströmbar ist. Vorzugsweise ist dabei der Innenraum des Rohrabschnitts durch die zentrale Blendenöffnung anströmbar, während der den Rohrabschnitt koaxial umlaufende Zuschaltkanal durch die verschließbaren Blendenfenster anströmbar ist und damit je nach Bedarf zugeschaltet oder aus dem Strömungsweg herausgenommen werden kann.

Eine weitere Erhöhung der Variabilität des Trimstellers, die eine verbesserte Anpassung an verschiedene Betriebsbereiche ermöglicht, wird dadurch erreicht, dass in der Wand des Rohrabschnitts zumindest ein und bevorzugt mehrere Durchlässe wie etwa Löcher gebildet sind, die eine Gasdurchströmung der Rohrwand des Rohrabschnitts erlauben.

Diese Durchlässe in der Wand des Rohrabschnitts sind bei einer besonders bevorzugten Ausführungsform der Erfindung verschließbar und öffenbar eingerichtet, wobei vorzugsweise eine stufenlose Verstellung zwischen einer vollständig geöffneten Stellung und einer vollständig geschlossenen Stellung möglich ist.

Damit weist die erfindungsgemäße Verdichteranordnung zum einen die vorzugsweise verschließbaren Blendenfenster und zum anderen die vorzugsweise ebenfalls verschließbaren Strömungsdurchlässe in der Wand des Rohrabschnitts auf, die den zentralen Trimkanal von dem ihn ringförmig umlaufenden Zuschaltkanal trennt. Durch die verschließbaren und öffenbaren Durchlässe kann somit die Strömungsquerschnittsfläche zwischen dem Zuschaltkanal und dem zentralen Trimkanal je nach Bedarf angepasst werden.

Da die Wand des Rohrabschnitts nicht senkrecht im Strömungskanal steht, sondern zumindest abschnittsweise im Wesentlichen in Richtung des Strömungskanals verläuft, verlaufen die Durchlässe nicht notwendigerweise senkrecht durch die Wand des Rohrabschnitts, sondern können in strömungsoptimierter Weise schräg bzgl. der Hauptströmungsrichtung des zentralen Trimkanals in die Rohrabschnittswand eingebracht sein, um auf diese Weise Verwirbelungen der von dem Zuströmkanal durch die Rohrabschnittswand in den zentralen Trimkanal strömenden Luft zu vermeiden.

Ebenso wie die verschließbaren Blendenfenster ist vorzugsweise der mindestens eine und sind vorzugsweise alle Durchlässe durch Verstellen, insbesondere durch Verdrehen eines beweglichen Abdeckteils gegenüber der im Anströmkanal feststehenden Blende teilweise oder vollständig verschließbar und öffenbar. In der Öffnungsstellung fluchten dazu Durchlässe des Abdeckteils mit den Durchlässen in der Rohrabschnittswand, so dass eine Durchströmung möglich ist, und in der Schließstellung sind die Durchlässe in der Rohrabschnittswand von einer geschlossenen Wand des Abdeckteils abgedeckt und damit verschlossen.

Das Abdeckteil kann einen an der Innenfläche der Wand des Rohrabschnitts anliegenden Hülsenabschnitt aufweisen, der um den zentralen Trimkanal herum verdrehbar eingerichtet ist und eine Anordnung von Durchlässen aufweist, die der Anordnung von Durchlässen in dem Rohrabschnitt entspricht und in eine damit fluchtende Stellung verdrehbar ist.

Im Hinblick auf eine einfache und zuverlässige Verstellbarkeit der erfindungsgemäßen Verdichteranordnung hat es sich als vorteilhaft erwiesen, dass das Verschließteil integral mit dem Abdeckteil gebildet ist. Mit anderen Worten ist das zum Verschließen der Blendenöffnungen eingerichtete Verschließteil zusammen mit dem einteilig damit gebildeten Abdeckteil zum Verschließen der Durchlässe im Rohrabschnitt verdrehbar. Dabei kann das Verschließteil in Form der etwa senkrecht zur Hauptströmungsrichtung in dem Anströmkanal verlaufenden Ringscheibe ausgebildet sein und/oder das Abdeckteil kann im Form eines ausgehend von der Ringscheibe in den Rohrabschnitt hineinragenden Hülsenabsatzes gebildet sein.

Die eingangs erläuterten hohen Anforderungen an die Betriebsbereiche von Turboladern können besonders gut mit einer erfindungsgemäßen Verdichteranordnung erfüllt werden, die vorzugsweise stufenlos mittels der Einstellvorrichtung in zwei, drei oder mehr Betriebsstellungen verstellbar ist, wobei die Betriebsstellungen wie folgt eingerichtet sind:
In einer ersten Betriebsstellung sind sowohl die Blendenfenster als auch die Rohrdurchlässe zum Verhindern einer Durchströmung geschlossen, so dass das Verdichterlaufrad über den zentralen Trimkanal anströmbar ist. Hierdurch kann aufgrund des stark verengten Strömungsquerschnitts im Anströmkanal ein guter Wirkungsgrad des Verdichters bei kleiner Motordrehzahl erreicht werden.

In einer zweiten Betriebsstellung ist zumindest ein Blendenfenster und sind vorzugsweise alle Blendenfenster geöffnet und zumindest ein Rohrdurchlass und vorzugsweise alle Rohrdurchlässe sind geschlossen. Mit anderen Worten ist das Verdichterlaufrad sowohl über den zentralen Trimkanal als auch durch die geöffneten Blendenfenster über den Zuschaltkanal anströmbar. Hierdurch ist aufgrund des großen Strömungsquerschnitts im Anströmkanal ein hoher Luftdurchsatz durch den Verdichter möglich, der insbesondere bei hohen Motordrehzahlen bzw. unter Volllast gewünscht ist. Zwischen der ersten und der zweite Betriebsstellung ist vorzugsweise eine stufenlose Verstellung des Strömungsquerschnitts möglich.

In einer dritten Betriebsstellung ist zumindest ein Blendenfenster und sind bevorzugt alle Blendenfenster geschlossen, und zumindest ein Rohrdurchlass und bevorzugt alle Rohrdurchlässe sind geöffnet. In dieser dritten Betriebsstellung ist das Verdichterlaufrad über den zentralen Trimkanal sowie über eine unten beschriebene Abgasrückführung, die in dem Zuschaltkanal mündet, aufgrund der geöffneten Durchlässe mit hoher Durchflussrate anströmbar.

Eine weitere Betriebsstellung, in der sowohl die Blendenfenster als auch die Durchlässe vollständig geöffnet sind, ist nicht notwendigerweise vorgesehen, da eine solche Betriebsstellung potentiell zu Verwirbelungen und anderen Strömungsproblemen des durch die Blendenfenster und durch die Durchlässe strömenden Gases führen kann.

Bei heutigen Verbrennungsmotoren wird zunehmend eine Niederdruck-Abgasrückführung (ND-AGR) eingesetzt, um gesetzlich vorgeschriebene Emissionsgrenzwerte zu erreichen. Das stromab einer Turbine eines Abgasturboladers entnommene Abgas wird dabei über eine Zuführung vor dem Verdichter des Abgasturboladers in den Anströmkanal des Frischluftstrangs eingeleitet und von diesem mit dem Frischgas angesaugt. Dabei sollte die Einleitung des rückgeführten Abgases möglichst nahe vor dem Verdichter erfolgen, um eine nicht gewünschte Kondensatbildung im Frischgas zu vermeiden oder gering zu halten. Für die Regelung der ND-AGR-Rate wird in die ND-AGR-Einleitung vor dem Verdichtereintritt meist ein Regelventil integriert.

Vorzugsweise weist die erfindungsgemäße Verdichteranordnung eine solche Abgasrückführung (AGR) auf, durch die aus dem Abgastrakt stammendes Abgas stromauf des Verdichterlaufrads in den Anströmkanal einleitbar ist. Sowohl die Zuleitung der AGR als auch die Einstellvorrichtung bzw. der Trimsteller sollten funktionsbedingt so dicht wie möglich vor dem Laufrad des Verdichters angeordnet sein, was eine konkurrierende Bauraumsituation zur Folge hat. Deshalb mündet die Abgasrückführung der erfindungsgemäßen Verdichteranordnung bevorzugt im Bereich der Einstellvorrichtung in den Ansaugkanal. Gemäß einer besonders bevorzugten Ausführungsform ist die Abgasrückführung zum Einleiten von Abgas in den Anströmkanal stromab der Blendenfenster, also zwischen Blende und Laufrad, angeordnet.

Die AGR-Zumischung in den Anströmkanal ist vorzugsweise variabel eingerichtet. Zu diesem Zweck kann ein Regelventil in der Zuführleitung der Abgasrückführung angeordnet sein, um die Menge des dem Verdichter zuzuführenden Abgases einstellen zu können.

Aus konstruktiven Gesichtspunkten hat sich eine seitlich einmündende Abgasrückführung in den Zuschaltkanal, der den Rohrabschnitt koaxial umläuft, als besonders zweckmäßig erwiesen. Damit kann der Zuschaltkanal zum einen durch Frischgas über die Blendenfenster und/oder zum anderen durch Abgas über die Abgasrückführung gespeist werden, wodurch eine individuelle und an den Bedarf angepasste Zumischung möglich ist.

Gemäß einer besonders bevorzugten Ausführungsform der Erfindung ist eine Einstellung der AGR-Zumischung in den Anströmkanal durch die oben beschriebenen und vorzugsweise stufenlos öffenbaren und schließbaren Durchlässe in dem Rohrabschnitt möglich. Eine hohe AGR-Rate kann durch die Öffnung der Durchlässe in dem Rohrkanal eingestellt werden, da bei geöffneten Rohrdurchlässen ein großer Strömungsquerschnitt zwischen der Abgasrückführung und dem zentralen Trimkanal bzw. dem Verdichterlaufrad gebildet ist.

Bei herkömmlichen ND-Abgasrückrührungen ist regelmäßig der Einsatz einer Abgasklappe im Abgastrakt zur Einstellung einer gewünschten AGR-Rate erforderlich. Ein Schließen der Abgasklappe führt zu einem höheren Abgasgegendruck im Abgastrakt und damit zu einer höheren AGR-Rate, wobei jedoch ein höherer Kraftstoffverbrauch mit einer geschlossenen Abgasklappe verbunden ist.

Da die AGR-Rate bei der erfindungsgemäßen Verdichteranordnung mittels der Einstellvorrichtung einstellbar ist, kann bei Einsatz der erfindungsgemäßen Verdichteranordnung ggf. vollständig auf den Einsatz einer Abgasklappe verzichtet werden.

Die AGR-Rate kann erfindungsgemäß in einfacher Weise durch ein Öffnen der Durchlässe in der Wand des Rohrabschnitts erhöht werden, da dadurch der Strömungsquerschnitt zwischen der in den Zuschaltkanal einmündenden Abgasrückführung und dem das Verdichterlaufrad zentral anströmenden Trimkanal erhöht werden kann. Die oben erläuterte dritte Betriebsstellung mit geschlossenen Blendenfenstern und geöffneten Durchlässen dient damit insbesondere der Bereitstellung einer hohen ND-AGR-Rate in vorgegebenen Drehzahl- und Lastbereichen.

Mit anderen Worten kann die Einstellvorrichtung bei der erfindungsgemäßen Verdichteranordnung zum Verringern und/oder Vergrößern eines Strömungsquerschnitts zwischen der Abgasrückführung und dem zentralen Trimkanal bzw. dem Verdichterlaufrad eingerichtet sein.

Die Möglichkeit, über den beschriebenen Nebenkanal Abgas in den Frischlufttrakt einzuleiten, bietet aufgrund der stufenlosen Steuerung die Möglichkeit zur kennfeldweiten AGR-Nutzung.

Zur Bereitstellung der benötigten Antriebsleistung für den Verdichter bei geringen Massenströmen ist eine Kombination mit einem elektrischen Zusatzverdichter und/oder einem Wastegate möglich.

Die erfindungsgemäße Kombination aus Einstellvorrichtung bzw. Trimsteller und AGR-Einleitung im Anströmkanal des Frischluftstrangs sowie die dadurch mögliche variable Gasvermischung bieten eine besonders hohe Variabilität und gute Regelbarkeit der Verdichteranströmung und des Abgasturboladers insgesamt.

Eine Kombination mit einem E-Booster ist alternativ oder zusätzlich möglich.

Bei einer besonders bevorzugten Ausführungsform der Erfindung weist die erfindungsgemäße Verdichteranordnung einen E-Booster auf oder ist mit einem E-Booster in Form eines elektrischen Zusatzverdichters kombiniert. Der E-Booster kann bereits bei niedrigen Motordrehzahlen von Beginn an Ladedruck aufbauen und für Drehmoment sorgen. Der E-Booster kann zum elektrischen Antreiben eines Verdichterlaufrads vorgesehen sein und dazu einen E-Motor aufweisen.

Im Bereich niedriger Motordrehzahlen ist der durch einen Turbolader verfügbare Ladedruck begrenzt. Wesentliche Gründe dafür sind einerseits die in diesem Betriebsbereich nur begrenzt zur Verfügung stehende Abgasenthalpie und andererseits die Lage der Pumpgrenze der Verdichteranordnung. Eine maximale Ausschöpfung der zur Verfügung stehenden Abgasenthalpie kann bei bekannten Turboladern durch entsprechende Regelvorrichtungen der Turbine erfolgen, bspw. variable Turbinengeometrie VTG, Wastegate WG, oder VTG und WG in Kombination. Die Lage der Pumpgrenze begrenzt den möglichen Ladedruckaufbau in Richtung kleiner Luftmasseströme (kleine Motordrehzahlen) durch die dann einsetzenden Betriebsinstabilitäten der Verdichteranordnung. Durch den Einsatz des Trimstellers kann die Pumpgrenze der Verdichteranordnung in Richtung kleiner Luftmassenströme verschoben werden, wodurch höhere Ladedrücke bei niedrigen Motordrehzahlenermöglicht werden. Im Motorbetrieb bestehen zu den stationären Ladedruckanforderungen auch dynamische Ladedruckanforderungen durch Beschleunigungsvorgänge oder Lastwechsel. In solchen Fällen kann die Verdichteranordnung des Abgasturboladers, begrenzt durch dessen mechanische und thermische Trägheit sowie die nur verzögert ansteigende Abgasenthalpie, nur mit einer begrenzten systemspezifischen Dynamik Ladedruck erzeugen. Diese zeitlichen Verzögerungen im Ladedruckaufbau haben negative Auswirkungen auf die Fahrperformance des Fahrzeugs und insbesondere auf die Abgasemissionen bei dynamischen Fahrvorgängen. In diesem Zusammenhang ist der zusätzliche Einsatz des E-Boosters für die Aufladung bei einer erfindungsgemäßen Verdichteranordnung besonders vorteilhaft:
Der E-Booster ist durch den elektrischen Antrieb entkoppelt von der Abgasenthalpie. Der E-Booster kann in Reihe oder parallel zu der Verdichteranordnung geschalten sein, so dass er sehr dynamisch einen zusätzlichen Beitrag zum Ladedruck ermöglichen oder diesen sogar komplett autark erzeugen kann. Im Falle einer Reihenschaltung kann der durch den Abgasturbolader und den E-Booster erzeugte Ladedruck dabei den durch den Turbolader alleine möglichen, stationären Ladedruckaufbau kurzfristig übersteigen. Der zur Verfügung gestellte Ladedruck entspricht in diesem Fall einem Betriebspunkt, der im Verdichterkennfeld links (in Richtung kleiner Masseströme) von der Pumpgrenze liegt. Eine solche Ladedrucküberhöhung ist insbesondere bei niedrigen Motordrehzahlen (Low-End-Torque) vorteilhaft, um das dynamische Anfahrverhalten des Fahrzeugs zu verbessern. Diese Ladedrucküberhöhung ist allerdings durch die verfügbare elektrische Energie aus dem Bordnetz sowie thermische Betriebsgrenzen des E-Boosters zeitlich begrenzt. Eine stationäre Ladedruck- und folglich Drehmomenterhöhung lässt sich also nur durch einen E-Booster nicht oder nur geringfügig erreichen.

Im Falle einer stationären Drehmomentenüberhöhung würde sich der Betriebspunkt der Verdichteranordnung nach dem Abschalten des E-Boosters (nach max. 6-10 Sekunden) dynamisch in einen instabilen Betriebsbereich jenseits der Pumpgrenze verschieben. Der Turbolader würde im schlimmsten Falle durch das einsetzende Pumpen einen Totalschaden erleiden.

Durch den Einsatz des Trimstellers lässt sich bei der erfindungsgemäßen Verdichteranordnung die gewünschte Drehmomentenerhöhung im Bereich kleiner Motordrehzahlen durch die Verschiebung der Pumpgrenze auch stationär erreichen. Der kombinierte Einsatz eines E-Boosters im Zusammenspiel mit einer erfindungsgemäßen Verdichteranordnung mit Trimsteller ermöglicht folglich eine dynamische (unabhängig von der Abgasenthalpie) und stationäre Drehmomentenerhöhung des Verbrennungsmotors im Bereich niedriger Drehzahlen. Dadurch kann das Anfahrverhalten des Fahrzeugs positiv beeinflusst oder die erreichbare Nennleistung mit einem mono-turboaufgeladenen Verbrennungsmotor bei gleicher Anfahrperformance gesteigert werden. Um die gewünschte Drehmomentenerhöhung durch den Einsatz des Trimstellers auch stationär zu ermöglichen, ist eine teillastoptimierte Turbine notwendig. Hier kommen bspw. teillastoptimierte aerodynamische Auslegungen der Turbine und/oder entsprechende Regelungsverfahren, wie etwa die oben beschriebenen VTG, WG einzeln oder im Kombination, zum Einsatz. Alternative Möglichkeiten zum Trimsteller unter diesen Randbedingungen (z.B. Scavenging) sind aufwändiger und mit höheren Kosten verbunden.

Eine besonders strömungsgünstige Auslegung der Einstellvorrichtung ist dadurch möglich, dass eine trichterförmige Verjüngung des Anströmkanals stromab der Blende und stromauf des Verdichterlaufrads vorgesehen ist. Vorzugsweise entspricht dabei der kleinste Strömungsdurchmesser der Verjüngung im Wesentlichen dem Durchmesser des Rohrabschnitts oder ist etwas größer als dieser. Alternativ oder zusätzlich ist der kleinste Strömungsdurchmesser der Verjüngung unmittelbar stromab des dem Verdichterlaufrads zugewandten Endes des Rohrabschnitts angeordnet, so dass die Verjüngung das stromabseitige Ende des Zuschaltkanals bildet. Damit bilden die Blendenfenster das stromaufseitige Ende des Zuschaltkanals und die Verjüngung das stromabseitige Ende des Zuschaltkanals. Am stromabseitigen Ende des Zuschaltkanals verläuft der Strömungsweg des Zuschaltkanals - geführt durch die Verjüngung - radial nach innen, so dass das durch den Zuschaltkanal strömende Fluid mit dem durch den Rohrabsatz strömenden Fluid zusammengeführt wird. Dieser ringförmig von radial außen dem zentralen Strömungsweg zugeführte Strömungsweg des Zuschaltkanals führt zu einem besonders stabilen und wirbelfreien Strömungsverhalten in Richtung auf das Verdichterlaufrad.

Gemäß einem weiteren Gesichtspunkt betrifft die vorliegende Erfindung eine Brennkraftmaschine mit einem Verbrennungsmotor, einem Abgasstrang, einem Frischgasstrang und einem Abgasturbolader mit einer in den Abgasstrang integrierten Turbine und einer in den Frischgasstrang integrierten, erfindungsgemäßen Verdichteranordnung.

Eine (ND-)Abgasrückführung kann zwischen dem Abgasstrang und dem Frischgasstrang angeordnet sein und im Bereich der Einstellvorrichtung stromauf des Verdichterlaufrads in den Anströmkanal einmünden. Bei einer besonders bevorzugten Ausführungsform der Erfindung mündet die Abgasrückführung in dem den zentralen Trimkanal ringförmig umlaufenden Zuschaltkanal, der über die Blendenfenster anströmbar ist.

Weiter bevorzugt ist die AGR-Rate mittels der Einstellvorrichtung steuerbar oder regelbar eingerichtet. Zu diesem Zweck kann die Einstellvorrichtung zum Verändern des Strömungsquerschnitts zwischen der Abgasrückführung bzw. dem Zuschaltkanal und dem zentralen Trimkanal eingerichtet sein.

Eine erfindungsgemäße Brennkraftmaschine weist nicht notwendigerweise eine Abgasklappe zum Einstellen einer AGR-Rate auf.

Vorzugsweise weist die Brennkraftmaschine einen E-Booster in Form eines elektrischen Zusatzverdichters auf, der parallel oder in Reihe zu der Verdichteranordnung geschaltet sein kann.

Es wird auf die obigen Ausführungen verwiesen, wobei die oben beschriebenen Merkmale einzeln oder in beliebiger Kombination bei der erfindungsgemäßen Brennkraftmaschine zum Einsatz kommen können, ohne hier nochmals wiederholt zu werden.

Gemäß einem weiteren Gesichtspunkt betrifft die vorliegende Erfindung ein Verfahren zum Betreiben einer erfindungsgemäßen Brennkraftmaschine, bei dem eine Abgasdurchflussmenge durch eine stromauf des Verdichterlaufrads in den Frischgasstrang einmündende Abgasrückführung mittels der Einstellvorrichtung der Verdichteranordnung eingestellt wird. Durch die Einstellvorrichtung kann ein Strömungsquerschnitt zwischen der Abgasrückführung und dem Verdichterlaufrad eingestellt werden. Bei einer besonders bevorzugten Ausführungsform wird die Abgasdurchflussmenge durch Verstellen, insbesondere durch Verdrehen eines im Anströmkanal angeordneten Abdeckteils eingestellt. Das Abdeckteil kann zum Verschließen von Durchlässen zwischen einem zentralen Trimkanal und einem diesen ringförmig umlaufenden Zuschaltkanal eingerichtet sein, in den die Abgasrückführung einmündet.

Bei herkömmlichen ND-Abgasrückführungen wird die AGR-Rate regelmäßig mittels einer Abgasklappe im Abgastrakt eingestellt. Gemäß dem erfindungsgemäßen Verfahren wird vorzugsweise die AGR-Rate zumindest in vorgegebenen Betriebs- und Drehzahlbereichen nicht mittels der Abgasklappe, sonders mittels der Einstellvorrichtung im Anströmkanal des Frischgastrakts eingestellt. Entsprechend entfällt der mit dem Einsatz einer Abgasklappe verbundene höhere Kraftstoffverbrauch aufgrund des höheren Abgasgegendrucks.

Verschiedene Ausführungsformen der Erfindung bieten insbesondere einige oder alle der folgenden Vorteile:
- Entfall der Abgasklappe,
- Kombination eines Trimstellers mit der AGR-Einleitung und -Vermischung,
- Besonders strömungsoptimierte Auslegung eines Trimstellers und folglich optimierte Anströmung des Verdichterlaufrads,
- Kombination von Trimsteller und elektrischer Zusatzaufladung mittels E-Booster.

Die Erfindung wird im Folgenden anhand der Zeichnung näher erläutert. Diese zeigt in
- Fig. 1: ein Ausführungsbeispiel einer Verdichteranordnung ohne erfindungsgemäße Strömungsdurchlässe in einer geöffneten Stellung in einer perspektivischen Ansicht,
- Fig. 2: die Verdichteranordnung aus Fig. 1 in einer geschlossenen Stellung in einer perspektivischen Ansicht,
- Fig. 3: die Verdichteranordnung aus Fig. 1 in einer geöffneten Stellung in einer Schnittansicht,
- Fig. 4: die Verdichteranordnung aus Fig. 1 in einer geschlossenen Stellung in einer Schnittansicht,
- Fig. 5a-d: verschiedene Ansichten von Bestandteilen der Einstellvorrichtung des Ausführungsbeispiels einer erfindungsgemäßen Verdichteranordnung,
- Fig. 6: ein Ausführungsbeispiel einer erfindungsgemäßen Verdichteranordnung in einer schematischen, der Erläuterung dienenden Ansicht,
- Fig. 7: das in Fig. 6 gezeigte Ausführungsbeispiel in einer Explosionsdarstellung,
- Fig. 8: eine perspektivische Ansicht des Ausführungsbeispiels gemäß den Fig. 6 und 7 in drei verschiedenen Betriebsstellungen I, II und III, und
- Fig. 9: eine Darstellung des Verdichterkennfelds der Verdichteranordnung des Ausführungsbeispiels gemäß den Fig. 6 bis 8.

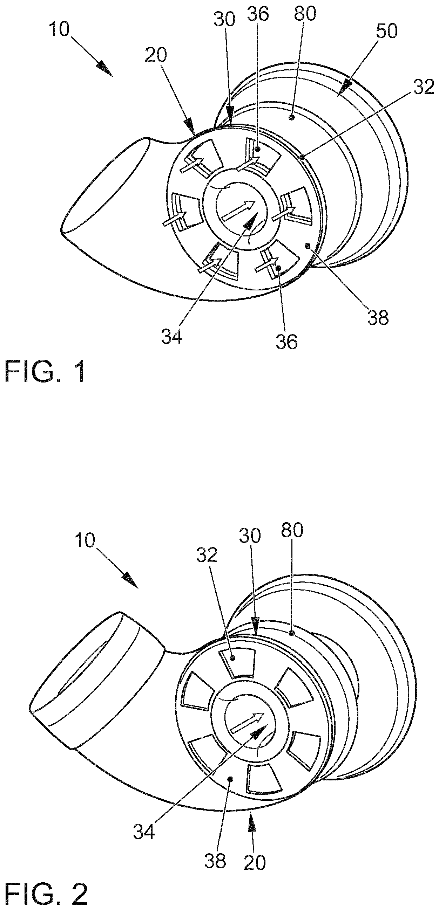

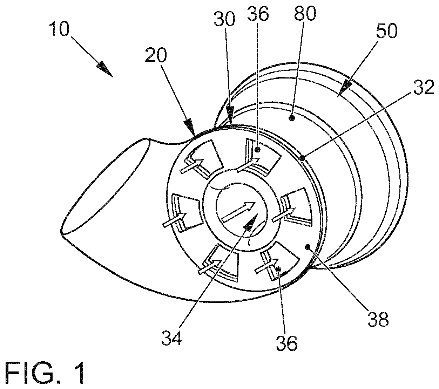

Ein Ausführungsbeispiel einer Verdichteranordnung 10 ohne erfindungsgemäße Strömungsdurchlässe ist in Figur 1 in einer perspektivischen Ansicht gezeigt. Sie ist zum Einbau in einen Frischluftstrang einer Brennkraftmaschine mit Abgasturbolader vorgesehen. Der Abgasturbolader umfasst eine im Abgastrakt angeordnete und von dem Abgas angetriebene Turbine (nicht gezeigt) und einen durch die Turbine angetriebenen Radialverdichter mit Verdichterlaufrad 50, das über einen Anströmkanal 20 mit Frischgas anströmbar ist.

Die Verdichteranordnung 10 besteht aus dem Radialverdichter mit Verdichterlaufrad 50 und aus einem stromauf des Verdichterlaufrads 50 angeordneten Anströmkanal 20, durch den das dem Verdichterlaufrad 50 zuzuführende Frischgas strömt. Der Anströmkanal 20 ist stromabwärtig direkt eintrittsseitig mit dem Verdichter verbunden und kann in Form einer ggf. modifizierten Ansaughutze gebildet sein.

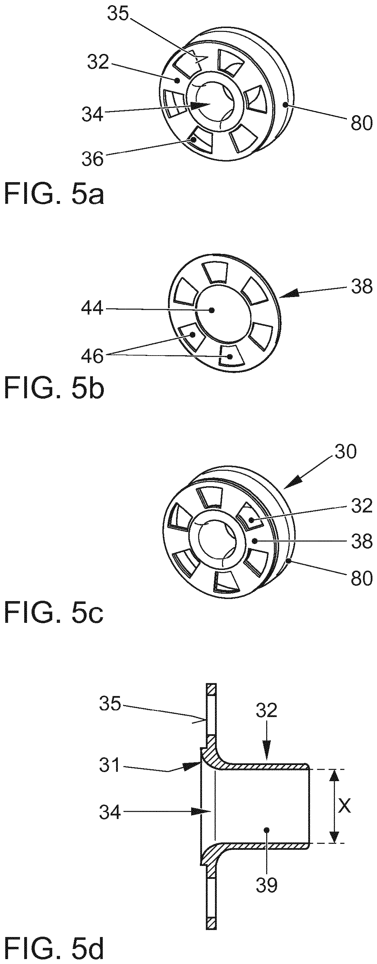

In dem Anströmkanal 20 ist eine Einstellvorrichtung 30 zum Verändern einer Strömungsquerschnittsfläche des Anströmkanals 20 angeordnet. Die Einstellvorrichtung 30 umfasst eine im Anströmkanal 20 feststehende Blende 32 mit einer zentral im Anströmkanal vorhandenen Blendenöffnung 34 und mehreren, die zentrale Blendenöffnung 34 umlaufenden Blendenfenstern 36. Durch die zentrale Blendenöffnung 34 tritt die Frischluft in einen Rohrabschnitt 39 mit einem vorgegebenen (konstanten oder in Strömungsrichtung variierenden) Trimdurchmesser X ein, der die Frischluft hin zu einem zentralen Abschnitt des Laufrads 50 führt. Der durch die zentrale Blendenöffnung 34 und den Rohrabschnitt 39 gebildete Trimkanal ist bei der hier beschriebenen Ausführungsform nicht verschließbar und stellt somit eine Mindest-Strömungsquerschnittsfläche für geringe Masseströme bereit. Dieser Trimkanal ist besonders deutlich in Fig. 5d dargestellt, die die Blende 32 in einer Querschnittsansicht zeigt.

Die zentrale Blendenöffnung 34 weist einen sich in Strömungsrichtung allmählich verjüngenden Eintrittsquerschnitt 31 auf, um einen verlustarmen Strömungsverlauf für das in den Trimkanal eintretende Frischgas zu ermöglichen. Mit anderen Worten ist die zentrale Blendenöffnung 34 trichterartig ausgeformt, wobei der Übergang zwischen Blendenöffnung 34 und Rohrabschnitt 39 abgerundet ist.

Wie besonders deutlich in Fig. 5a dargestellt ist, verläuft um die zentrale Blendenöffnung 34 herum ringartig eine sich im Wesentlichen senkrecht zur Strömungsrichtung erstreckende Blendenfläche 35, in die die Blendenfenster 36 eingebracht sind. Bei der dargestellten Ausführungsform sind die Blendenfenster 36 im Wesentlichen kreisringsegmentartig geformt, so dass der runde Querschnitt des Anströmkanals 20 optimal ausgenutzt werden kann.

Beispielhaft sind sechs Blendenfenster gezeigt, wobei zwei benachbarte Blendenfenster jeweils einen gegenseitigen Winkel von etwa 60° einschließen und sich jedes Blendenfenster um einen Winkel von etwa 30° erstreckt. Zwischen zwei Blendenfenstern weist die Blendenfläche 35 jeweils kreisringsegmentförmige Stege auf, die sich ebenfalls jeweils um einen Winkel von etwa 30° erstrecken.

An der Blendenfläche 35 liegt ein Verschließteil 38 in Form einer drehbar eingerichteten Ringscheibe an, wobei die Ringscheibe ebenso wie die Blende 32 eine zentrale Öffnung 44 und die zentrale Öffnung 44 ringartig umlaufende Ringfenster 46 aufweist. Das als Ringscheibe ausgebildete Verschließteil 38 ist besonders deutlich in Fig. 5b dargestellt.

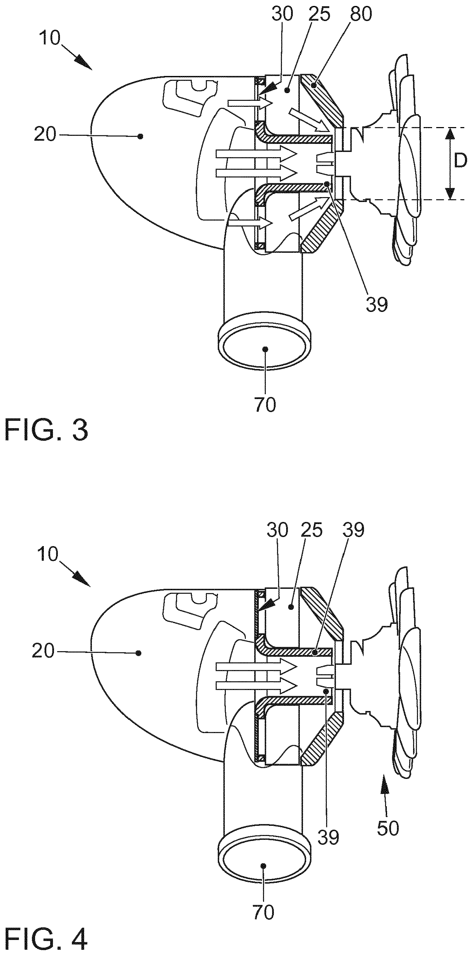

Das Verschließteil 38 dient zum Verschließen und zum Öffnen der Blendenfenster 36 durch Verdrehen um die zentrale Strömungsachse. In den Figuren 1, 3 und 5c befindet sich die Einstellvorrichtung 30 in einer vollständig geöffneten Stellung, in der alle Blendenfenster 36 von Frischgas durchströmbar sind. In dieser Stellung entspricht die Winkellage der Blendenfenster 36 derjenigen der Ringfenster 46. Ein hinter der Blendenfläche 35 vorhandener, den Rohrabschnitt 39 koaxial umlaufender Zuströmkanal 25, kann durch die Blendenfenster 36 mit Frischgas angeströmt werden. Am stromabwärtigen Ende des Zuströmkanals 25 wird der durch den Zuströmkanal 25 verlaufende Strömungsweg durch eine an dieser Stelle eingerichtete Verjüngung 80 der Außenwand des Anströmkanals 20 radial nach innen mit dem durch den Rohrabschnitt 39 verlaufenden zentralen Strömungsweg zusammengeführt. Der Verlauf dieser beiden Strömungswege ist in Fig. 3 zum einen durch die beiden zentralen Pfeile und zum anderen durch die beiden äußeren Pfeile (Zuströmkanal 25) angedeutet.

In den Figuren 2 und 4 befindet sich die Einstellvorrichtung 30 in einer geschlossenen Stellung, in welcher nur die zentrale Blendenöffnung 34 und damit der Rohrabschnitt 39 von Frischgas durchströmbar ist. Der Trim ist dadurch reduziert, wodurch die Strömungsgeschwindigkeit angehoben werden kann. In dieser Stellung sind die Blendenfenster 36 jeweils versetzt zu den Ringfenstern 46 angeordnet, so dass sie von den Stegen zwischen den Ringfenstern 46 verschlossen werden.

Ein besonders wichtiges Merkmal ist die Zuführungsleitung einer Abgasrückführung 70, durch die Abgas von dem Abgastrakt in den Frischgasgastrakt stromauf des Verdichterlaufrads 50 eingeleitet wird. Die Abgasrückführung 70 mündet im Bereich der Einstellvorrichtung 30, und zwar zwischen der Blendenfläche 35 und dem Verdichterlaufrad 50, in den Anströmkanal 20 ein. Damit ist das durch die Abgasrückführung 70 zugeführte Abgas in dem ringförmigen Zuströmkanal 25 mit dem durch die Blendenfenster 36 zugeführten Frischgas vermischbar. Je nach Stellung des Verschließteils 38 und je nach Stellung eines Regelventils der Abgasrückführung 70 sind unterschiedliche Mischungsverhältnisse einstellbar. Damit beinhaltet die vorliegende Erfindung eine variable AGR-Zumischung. Diese Kombination einer AGR-Einleitung und Vermischung mit dem Frischgas unter Aufrechterhaltung des Mindest-Frischgasströmungsdurchmessers durch die zentrale Blendenöffnung 34 ist als besonders vorteilhaft herauszustellen.

Weitere Vorteile sind die besonders strömungsgünstige Auslegung der Einstellvorrichtung 30, eine einfache Regelbarkeit durch Verdrehung der Ringscheibe um jeweils vorgegebene Winkel, die besonders hohe Robustheit der Blende und der Ringscheibe (hohe Verstellkräfte sind auch bspw. bei Vereisung und Verschmutzung aufbringbar) sowie der kleine erforderliche Bauraum.

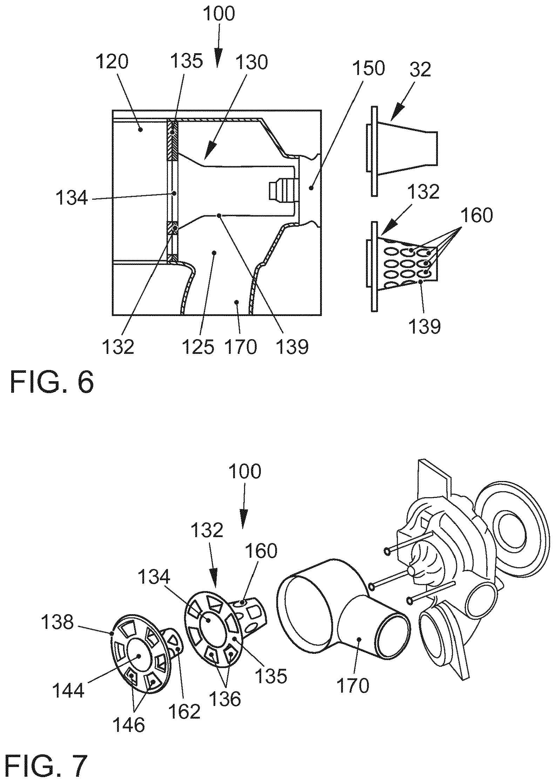

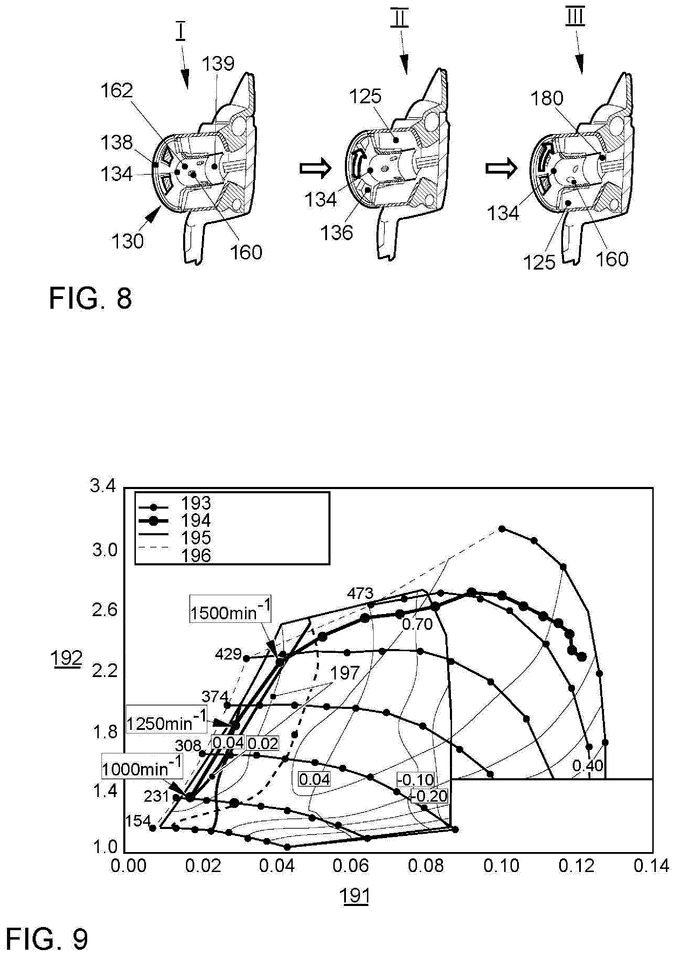

Die Figuren 6 bis 8 zeigen ein Ausführungsbeispiel einer erfindungsgemäßen Verdichteranordnung 100. In Fig. 6 ist die Verdichteranordnung 100 in einer schematischen Schnittdarstellung dargestellt, in Fig. 7 ist die Verdichteranordnung 100 in einer Explosionsdarstellung gezeigt, und in Fig. 8 sind verschiedene Betriebsstellungen der Verdichteranordnung 100 in einer teilweise perspektivisch und teilweise im Schnitt dargestellten Ansicht dargestellt.

Das zweite Ausführungsbeispiel entspricht in wesentlichen Punkten dem ersten Ausführungsbeispiel, so dass auf die obigen Ausführungen verwiesen werden kann. Die Verdichteranordnung 100 ist zum Einbau in einen Frischluftstrang einer Brennkraftmaschine mit Abgasturbolader vorgesehen. Der Abgasturbolader umfasst eine im Abgastrakt angeordnete und von dem Abgas angetriebene Turbine (nicht gezeigt) und einen durch die Turbine angetriebenen Radialverdichter mit dem Verdichterlaufrad 150, das über den Anströmkanal 120 mit Frischgas anströmbar ist.

In dem Anströmkanal 120 ist eine Einstellvorrichtung 130 zum Verändern einer Strömungsquerschnittsfläche des Anströmkanals 120 angeordnet. Die Einstellvorrichtung 130 umfasst eine im Anströmkanal 120 feststehende Blende 132 mit einer zentral im Anströmkanal vorhandenen Blendenöffnung 134 und mehreren Blendenfenstern 136, die in Fig. 7 erkennbar sind. Durch die zentrale Blendenöffnung 134 tritt die Frischluft in einen Rohrabschnitt 139 mit einem vorgegebenen Trimdurchmesser ein, der die Frischluft hin zu einem zentralen Abschnitt des Laufrads 150 führt. Der durch die zentrale Blendenöffnung 134 und den Rohrabschnitt 139 gebildete zentrale Trimkanal ist ebenso wie bei dem ersten Ausführungsbeispiel nicht verschließbar und stellt somit eine Mindest-Strömungsquerschnittsfläche für geringe Masseströme bereit.

Wie besonders deutlich in Fig. 7 dargestellt ist, verläuft um die zentrale Blendenöffnung 134 herum ringartig eine sich im Wesentlichen senkrecht zur Strömungsrichtung erstreckende Blendenfläche 135, in die die Blendenfenster 136 eingebracht sind. Bei der dargestellten Ausführungsform sind die Blendenfenster 136 im Wesentlichen kreisringsegmentartig geformt, so dass der runde Querschnitt des Anströmkanals 20 optimal ausgenutzt werden kann. Beispielhaft sind sechs Blendenfenster gezeigt, wobei zwei benachbarte Blendenfenster jeweils einen gegenseitigen Winkel von etwa 60° einschließen und sich jedes Blendenfenster um einen Winkel von etwa 30° erstreckt. Zwischen zwei Blendenfenstern weist die Blendenfläche 135 jeweils kreisringsegmentförmige Stege auf, die sich ebenfalls jeweils um einen Winkel von etwa 30° erstrecken. Eine hiervon abweichende Anordnung der Blendenfenster ist ebenfalls vorstellbar.

An der Blendenfläche 135 liegt ein Verschließteil 138 in Form einer drehbar eingerichteten Ringscheibe an, wobei die Ringscheibe ebenso wie die Blende 132 eine zentrale Öffnung 144 und die zentrale Öffnung 144 ringartig umlaufende Ringfenster 146 aufweist. Das Verschließteil 138 dient zum Verschließen und zum Öffnen der Blendenfenster 136 durch Verdrehen um die zentrale Strömungsachse. In der in Fig. 8 mittigen Ansicht befindet sich die Einstellvorrichtung 130 in einer zweiten Betriebsstellung II, in der alle Blendenfenster 136 von Frischgas durchströmbar sind. In dieser Stellung entspricht die Winkellage der Blendenfenster 136 derjenigen der Ringfenster 146. Ein hinter der Blendenfläche 135 vorhandener, den Rohrabschnitt 139 koaxial umlaufender Zuströmkanal 125, kann durch die Blendenfenster 136 mit Frischgas angeströmt werden. Am stromabwärtigen Ende des Zuströmkanals 125 wird der durch den Zuströmkanal 125 verlaufende Strömungsweg durch eine an dieser Stelle eingerichtete Verjüngung 180 der Außenwand des Anströmkanals 120 radial nach innen mit dem durch den Rohrabschnitt 139 verlaufenden zentralen Strömungsweg zusammengeführt.

In den in Fig. 8 links und rechts dargestellten ersten und dritten Betriebsstellungen I und III sind die Blendenfenster geschlossen, während die zentrale Blendenöffnung 134 und damit der den zentralen Trimkanal bildende Rohrabschnitt 139 von Frischgas durchströmbar ist. Der Trim ist dadurch reduziert, wodurch die Strömungsgeschwindigkeit angehoben werden kann. In dieser Stellung sind die Blendenfenster 136 jeweils versetzt zu den Ringfenstern 146 angeordnet, so dass sie von den Stegen zwischen den Ringfenstern 146 verschlossen werden.

Ein besonders wichtiges Merkmal ist die Zuführungsleitung einer Abgasrückführung 170, durch die Abgas von dem Abgastrakt in den Frischgasgastrakt stromauf des Verdichterlaufrads 150 eingeleitet wird. Die Abgasrückführung 170 mündet im Bereich der Einstellvorrichtung 130, und zwar zwischen der Blendenfläche 135 und dem Verdichterlaufrad 150, in den Anströmkanal 120 ein. Damit ist das durch die Abgasrückführung 170 zugeführte Abgas besonders gut mit dem zugeführten Frischgas vermischbar, das durch den zentralen Trimkanal strömt.

Gegenüber dem ersten Ausführungsbeispiel weist die Einstellvorrichtung 130 des zweiten Ausführungsbeispiels folgende Unterschiede auf: Der Rohrabschnitt 139 der im Strömungskanal 120 angeordneten Blende 132 weist keine geschlossene Rohrwand auf (vgl. in Fig. 6 zu Vergleichszwecken rechts oben dargestellte Blende 32), sondern mehrere die Rohrwand durchsetzende Durchlässe 160 in Form von Löchern. Die Durchlässe 160 vergrößern den Strömungsquerschnitt zwischen der Abgasrückführung 170 und dem zentralen Trimkanal und erhöhen damit die AGR-Rate.

In Fig. 6 ist diese abgewandelte Blende 132 rechts unten in einer Seitenansicht dargestellt, wobei die strömungsoptimiert ausgeformten Durchlässe 160 erkennbar sind.

Die Durchlässe 160 sind mittels eines Abdeckteils 162 öffenbar und verschließbar eingerichtet, um auf diese Weise die AGR-Rate nach Bedarf einstellen zu können. Das Abdeckteil 162 ist in Form eines einteilig mit dem ringscheibenförmigen Verschließteil 138 gebildeten Hülsenabsatzes gebildet, der in den Rohrabschnitt 139 der Blende 132 hineinragt und zum Abdecken der Durchlässe 160 in einer Verschlussstellung vorgesehen ist.

Damit sind durch Verdrehen des Verschließteils 138 zum einen die Blendenfenster 136 öffenbar und verschließbar und zum anderen die Durchlässe 160 öffenbar und verschließbar, die eine Fluidverbindung zwischen dem Zuschaltkanal 125 und dem zentralen Trimkanal ermöglichen.

Bei dem zweiten Ausführungsbeispiel sind die Durchlässe 160 in einer räumlichen Anordnung in die Wand des Rohrabsatzes 139 eingebracht, die in Kombination mit der räumlichen Anordnung der Blendenfenster 136 folgende drei Betriebsstellungen ermöglicht, die in Fig. 8 dargestellt sind: eine erste Betriebsstellung I (erste Drehstellung des Verschließteils 138), in der sowohl die Blendenfenster 136 als auch die Durchlässe 160 von dem Verschließteil 138 bzw. dem davon hülsenartig vorragenden Abdeckteil 162 verschlossen sind, der zentrale Trimkanal jedoch geöffnet ist; eine zweite Betriebsstellung II (zweite Drehstellung des Verschließteils 138, hier um 30° gegenüber der ersten Betriebsstellung verdreht), in der die Blendenfenster 136 mit den Ringfenstern 146 fluchten und damit geöffnet sind, jedoch die Durchlässe 160 durch das Abdeckteil 162 geschlossen sind; und eine dritte Betriebsstellung III (dritte Drehstellung des Verschließteils 138, hier um 30° gegenüber der zweiten Betriebsstellung verdreht), in der die Blendenfenster 136 verschlossen sind, die Durchlässe 160 jedoch geöffnet sind, um eine hohe AGR-Rate bereitzustellen. Stufenlose Zwischenstellungen sind möglich.

In Figur 9 sind die durch das zweite Ausführungsbeispiel erzielbaren Wirkungsgradvorteile dargestellt. Zu sehen ist das Verdichterkennfeld der Basis (193) und der erfindungsgemäßen Verdichteranordnung. Die X-Achse bezeichnet den reduzierten Volumenstrom in m³/s (191), und die Y-Achse bezeichnet das Verdichterdruckverhältnis (192). Das Basiskennfeld ist durch 193, die Volllastkennlinie durch 194, das Differenzkennfeld zur optimierten Variante gemäß Ausführungsbeispiel 2 durch 195 und die Neutrallinie durch 196 bezeichnet. Die Vorteile der Erfindung zeigen sich insbesondere bis zu einer Drehzahl von etwa 1750 min⁻¹. Mittels der Linien 197 werden die Wirkungsgradvorteile durch Optimierung der Schaufelradanströmung herausgestellt.

Es hat sich herausgestellt, dass ein Potential zum Entfallen der Abgasklappe besteht. Bei einer AGR-Raten-Variation bei einer Drehzahl von 2000 min⁻¹ und einem effektiven Mitteldruck von 4 bar ergibt sich, dass durch die AGR-Betriebsstellung der trimvariablen Verdichteranordnung die Abgasklappe wesentlich länger bzw. vollständig (in Bezug zur Basis-AGR-Rate) geöffnet bleiben kann.

### Bezugszeichenliste

- 10, 100: Verdichteranordnung
- 20, 120: Anströmkanal
- 25, 125: Zuschaltkanal
- 30, 130: Einstellvorrichtung
- 31, 131: Eintrittsquerschnitt
- 32, 132: Blende
- 34, 134: zentrale Blendenöffnung
- 35, 135: Blendenfläche
- 36, 136: Blendenfenster
- 38, 138: Verschließteil/Ringscheibe
- 39, 139: Rohrabschnitt
- 44, 144: zentrale Ringöffnung
- 46, 146: Ringfenster
- 50, 150: Verdichterlaufrad
- 160: Strömungsdurchlässe
- 162: Abdeckteil
- 70, 170: Abgasrückführung
- 80, 180: trichterförmige Verjüngung
- 191: red. Volumenstrom
- 192: tot. Verdichterdruckverhältnis
- 193: Basiskennfeld
- 194: Volllastkennlinie 110 kW
- 195: Differenzkennfeld η_{geschlossen} - η_{offen}
- 196: Neutrallinie
- 197: Wirkungsgradvorteile
- D: kleinster Strömungsdurchmesser der Verjüngung
- X: Trimdurchmesser
- I: erste Betriebsstellung
- II: zweite Betriebsstellung
- III: dritte Betriebsstellung

## Patentansprüche

1. Verdichteranordnung (100) für eine Brennkraftmaschine mit einem Verdichterlaufrad (150), einem stromauf des Verdichterlaufrads (150) angeordneten Anströmkanal (120) und einer Einstellvorrichtung (130) zum Verändern einer Strömungsquerschnittsfläche des Anströmkanals (120), wobei die Einstellvorrichtung (130) eine im Anströmkanal (120) angeordnete Blende (132) mit einer zentralen Blendenöffnung (134) und mindestens einer weiteren Blendenöffnung in Form eines zumindest teilweise verschließbaren Blendenfensters (136) aufweist und wobei die zentrale Blendenöffnung (134) einen zu einem zentralen Abschnitt des Verdichterlaufrads (150) hin mündenden Rohrabschnitt (139) ausbildet, wobei zwischen einer Innenwand des Anströmkanals (120) und einer Außenwand des Rohrabschnitts ein den Rohrabschnitt ringförmig umlaufender Zuschaltkanal (125) gebildet ist, der durch das mindestens eine verschließbare Blendenfenster (136) anströmbar ist, **dadurch gekennzeichnet, dass** ein oder mehrere Strömungsdurchlässe (160) in der Außenwand des Rohrabschnitts (139) ausgebildet sind.

2. Verdichteranordnung nach Anspruch 1, **dadurch gekennzeichnet, dass** die Blende (132) zwei, drei oder mehr, insbesondere etwa sechs verschließbare Blendenfenster (136) aufweist, die ringförmig um die zentrale Blendenöffnung (134) herum angeordnet sind.

3. Verdichteranordnung nach Anspruch 2, **dadurch gekennzeichnet, dass** von den n Blendenfenstern (136) zwei benachbarte Blendenfenster jeweils einen Winkel von etwa 360°/n einschließen und/oder jedes Blendenfenster kreisringsegmentförmig mit einem Segmentwinkel von 360°/2n eingerichtet ist.

4. Verdichteranordnung nach mindestens einem der vorhergehenden Ansprüche, **dadurch gekennzeichnet, dass** die Blendenfenster (136) bevorzugt gleichzeitig durch Verstellen, insbesondere durch Verdrehen, eines beweglichen Verschließteils (138) gegenüber der im Anströmkanal feststehenden Blende (132) teilweise oder vollständig verschließbar oder öffenbar sind.

5. Verdichteranordnung nach Anspruch 4, **dadurch gekennzeichnet, dass** das Verschließteil (138) eine an einer etwa senkrecht zur Strömungsrichtung verlaufenden Blendenfläche (135) anlegbare drehbare Ringscheibe ist, mit einer an die zentrale Blendenöffnung (134) angepassten zentralen Ringöffnung (144) und an die Blendenfenster (136) angepassten, die zentrale Ringöffnung jeweils abschnittsweise umlaufenden Ringfenstern (146).

6. Verdichteranordnung nach einem der vorhergehenden Ansprüche, **dadurch gekennzeichnet, dass** der oder die Strömungsdurchlässe (160) in der Außenwand des Rohrabschnitts (139) verschließbar eingerichtet sind.

7. Verdichteranordnung einem der vorhergehenden Ansprüche, **dadurch gekennzeichnet, dass** die Strömungsdurchlässe (160) bevorzugt gleichzeitig durch Verstellen, insbesondere durch Verdrehen eines beweglichen Abdeckteils (162) gegenüber der im Anströmkanal feststehenden Blende (132) teilweise oder vollständig verschließbar oder öffenbar sind.

8. Verdichteranordnung nach den Ansprüchen 4 und 7, **dadurch gekennzeichnet, dass** das Verschließteil (138) einteilig mit dem Abdeckteil (162) gebildet ist, wobei das Abdeckteil nach Art eines Hülsenabsatzes ausgehend von dem Verschließteil in den Rohrabschnitt (139) hineinragt.

9. Verdichteranordnung nach einem der Ansprüche 6 bis 8, **dadurch gekennzeichnet, dass** die Verdichteranordnung in eine erste Betriebsstellung (I), in der sowohl die Blendenfenster (136) als auch die Rohrdurchlässe (160) zum Verhindern einer Durchströmung geschlossen sind, in eine zweite Betriebsstellung (II), in der zumindest ein und bevorzugt alle Blendenfenster (136) geöffnet und zumindest ein und bevorzugt alle Rohrdurchlässe (160) geschlossen sind, und/oder in eine dritte Betriebsstellung (III) verstellbar ist, in der zumindest ein und bevorzugt alle Blendenfenster (136) geschlossen und zumindest ein und bevorzugt alle Rohrdurchlässe (160) geöffnet sind.

10. Verdichteranordnung nach mindestens einem der vorhergehenden Ansprüche, **gekennzeichnet durch** eine Abgasrückführung (170), durch die Abgas stromauf des Verdichterlaufrads (150) im Bereich der Einstellvorrichtung (130), bevorzugt stromab des Blendenfensters (136), in den Anströmkanal (120) einleitbar ist.

11. Verdichteranordnung nach Anspruch 10, **dadurch gekennzeichnet, dass** die Abgasrückführung (170) in den Zuschaltkanal (125) mündet.

12. Verdichteranordnung nach Anspruch 10 oder 11, **dadurch gekennzeichnet, dass** die Einstellvorrichtung (130) zum Verändern einer Strömungsquerschnittsfläche zwischen der Abgasrückführung und dem Verdichterlaufrad eingerichtet ist.

13. Verdichteranordnung nach einem der vorhergehenden Ansprüche, **gekennzeichnet durch** eine trichterförmige Verjüngung (180) des Anströmkanals (120) stromab der Blende (132) und stromauf des Verdichterlaufrads (150), wobei bevorzugt der kleinste Strömungsdurchmesser (D) der Verjüngung (180) im Wesentlichen dem Durchmesser des Rohrabschnitts (139) entspricht und/oder unmittelbar stromab des dem Verdichterlaufrad (150) zugewandten Endes des Rohrabschnitts (139) angeordnet ist, so dass die Verjüngung (180) den Zuschaltkanal (125) stromabwärts begrenzt.

14. Verdichteranordnung nach einem der vorhergehenden Ansprüche, **gekennzeichnet durch** einen elektrisch angetriebenen E-Booster zur Erhöhung eines durch die Verdichteranordnung bereitstellbaren Ladedrucks.

15. Brennkraftmaschine mit einem Verbrennungsmotor, einem Abgasstrang, einem Frischgasstrang und einem Abgasturbolader mit einer in den Abgasstrang integrierten Turbine und einer in den Frischgasstrang integrierten Verdichteranordnung (100) nach einem der vorhergehenden Ansprüche.

16. Verfahren zum Betreiben einer Brennkraftmaschine nach Anspruch 15, die eine Verdichteranordnung (100) nach Anspruch 10 oder einem der von Anspruch 10 abhängigen Ansprüche umfasst, bei dem eine Abgasdurchflussmenge durch die stromauf des Verdichterlaufrads (150) in den Frischgasstrang einmündende Abgasrückführung (170) mittels der Einstellvorrichtung (130) der Verdichteranordnung und bevorzugt nicht mittels einer Abgasklappe eingestellt wird.

## Claims

1. Compressor arrangement (100) for a combustion machine, having a compressor impeller (150), having an inflow duct (120) arranged upstream of the compressor impeller (150), and having an adjustment device (130) for varying a flow cross-sectional area of the inflow duct (120), wherein the adjustment device (130) has, arranged in the inflow duct (120), an aperture (132) with a central aperture opening (134) and with at least one further aperture opening in the form of an at least partially closable aperture window (136), and wherein the central aperture opening (134) forms a pipe section (139) which opens toward a central section of the compressor impeller (150), wherein, between an inner wall of the inflow duct (120) and an outer wall of the pipe section, there is formed an activatable duct (125) which runs in ring-shaped fashion around the pipe section and into which flow can pass through the at least one closable aperture window (136), **characterized in that** one or more flow passages (160) are formed in the outer wall of the pipe section (139).

2. Compressor arrangement according to Claim 1, **characterized in that** the aperture (132) has two, three or more, in particular approximately six, closable aperture windows (136) which are arranged in ring-shaped fashion around the central aperture opening (134).

3. Compressor arrangement according to Claim 2, **characterized in that**, of the n aperture windows (136), two adjacent aperture windows enclose in each case an angle of approximately 360°/n, and/or each aperture window is configured in the shape of a segment of a circular ring, with a segment angle of 360°/2n.

4. Compressor arrangement according to at least one of the preceding claims, **characterized in that** the aperture windows (136) are closable or openable partially or entirely, preferably simultaneously, by adjustment, in particular by rotation, of a movable closure part (138) relative to the aperture (132) which is fixed in the inflow duct.

5. Compressor arrangement according to Claim 4, **characterized in that** the closure part (138) is a rotatable ring-shaped disc which can be caused to bear against an aperture surface (135) which runs approximately perpendicular to the flow direction, said ring-shaped disc having a central ring opening (144) which is adapted to the central aperture opening (134), and having ring windows (146) which are adapted to the aperture windows (136) and which run in encircling fashion, in each case in sections, around the central ring opening.

6. Compressor arrangement according to one of the preceding claims, **characterized in that** the one or more flow passages (160) in the outer wall of the pipe section (139) are configured so as to be closable.

7. Compressor arrangement according to one of the preceding claims, **characterized in that** the flow passages (160) are closable or openable partially or entirely, preferably simultaneously, by adjustment, in particular by rotation, of a movable cover part (162) relative to the aperture (132) which is fixed in the inflow duct.

8. Compressor arrangement according to Claims 4 and 7, **characterized in that** the closure part (138) is formed in one piece with the cover part (162), wherein the cover part protrudes in the manner of a sleeve projection from the closure part into the pipe section (139).

9. Compressor arrangement according to one of Claims 6 to 8, **characterized in that** the compressor arrangement is adjustable into a first operating position (I), in which both the aperture windows (136) and the pipe passages (160) are closed for the prevention of a throughflow, into a second operating position (II), in which at least one and preferably all aperture windows (136) are open and at least one and preferably all pipe passages (160) are closed, and/or into a third operating position (III) in which at least one and preferably all aperture windows (136) are closed and at least one and preferably all pipe passages (160) are open.

10. Compressor arrangement according to at least one of the preceding claims, **characterized by** an exhaust-gas recirculation arrangement (170) through which exhaust gas can be introduced into the inflow duct (120) upstream of the compressor impeller (150) in the region of the adjustment device (130), preferably downstream of the aperture window (136).

11. Compressor arrangement according to Claim 10, **characterized in that** the exhaust-gas recirculation arrangement (170) opens into the activatable duct (125).

12. Compressor arrangement according to Claim 10 or 11, **characterized in that** the adjustment device (130) is configured for varying a flow cross-sectional area between the exhaust-gas recirculation arrangement and the compressor impeller.

13. Compressor arrangement according to one of the preceding claims, **characterized by** a funnel-shaped narrowing (180) of the inflow duct (120) downstream of the aperture (132) and upstream of the compressor impeller (150), wherein preferably, the smallest flow diameter (D) of the narrowing (180) substantially corresponds to the diameter of the pipe section (139) and/or is arranged directly downstream of that end of the pipe section (139) which faces toward the compressor impeller (150), such that the narrowing (180) delimits the activatable duct (125) downstream.

14. Compressor arrangement according to one of the preceding claims, **characterized by** an electrically driven E-booster for increasing a charge pressure that can be provided by the compressor arrangement.

15. Combustion machine having an internal combustion engine, having an exhaust tract, having a fresh-gas tract, and having an exhaust-gas turbocharger with a turbine integrated into the exhaust tract and with a compressor arrangement (100) according to one of the preceding claims integrated into the fresh-gas tract.

16. Method for operating a combustion machine according to Claim 15, which comprises a compressor arrangement (100) according to Claim 10 or one of the claims dependent on Claim 10, in which method an exhaust-gas throughflow rate through the exhaust-gas recirculation arrangement (170), which opens into the fresh-gas tract upstream of the compressor impeller (150), is adjusted by means of the adjustment device (130) of the compressor arrangement and preferably not by means of an exhaust-gas flap.

## Revendications

1. Agencement de compresseur (100) pour un moteur à combustion interne, comprenant un rotor de compresseur (150), un canal d'afflux (120) disposé en amont du rotor de compresseur (150) et un dispositif d'ajustement (130) pour faire varier une section transversale d'écoulement du canal d'afflux (120), le dispositif d'ajustement (130) présentant un diaphragme (132) disposé dans le canal d'afflux (120) avec une fenêtre de diaphragme centrale (134) et au moins une ouverture de diaphragme supplémentaire sous la forme d'une fenêtre de diaphragme (136) pouvant être au moins en partie fermée et l'ouverture de diaphragme centrale (134) constituant une portion tubulaire (139) débouchant vers une portion centrale du rotor de compresseur (150), un canal de connexion (125) entourant sous forme annulaire la portion tubulaire étant formé entre une paroi interne du canal d'afflux (120) et une paroi externe de la portion tubulaire, lequel canal de connexion peut recevoir l'écoulement par le biais de l'au moins une fenêtre de diaphragme pouvant être fermée (136), **caractérisé en ce qu'**un ou plusieurs passages d'écoulement (160) sont réalisés dans la paroi extérieure de la portion tubulaire (139).

2. Agencement de compresseur selon la revendication 1, **caractérisé en ce que** le diaphragme (132) présente deux, trois ou plus de trois, en particulier environ six fenêtres de diaphragme (136) pouvant être fermées, qui sont disposées sous forme annulaire autour de l'ouverture de diaphragme centrale (134).

3. Agencement de compresseur selon la revendication 2, **caractérisé en ce que** parmi les n fenêtres de diaphragme (136), deux fenêtres de diaphragme adjacentes forment à chaque fois un angle d'environ 360°/n et/ou chaque fenêtre de diaphragme est prévue en forme de segment de cercle annulaire avec un angle de segment de 360°/2n.

4. Agencement de compresseur selon au moins l'une quelconque des revendications précédentes, **caractérisé en ce que** les fenêtres de diaphragme (136) peuvent de préférence être partiellement ou complètement fermées ou ouvertes, de préférence simultanément, par déplacement, en particulier par rotation, d'une partie de fermeture mobile (138) par rapport au diaphragme fixe (132) dans le canal d'afflux.

5. Agencement de compresseur selon la revendication 4, **caractérisé en ce que** la partie de fermeture (138) est un disque annulaire rotatif pouvant être appliqué contre une surface de diaphragme (135) s'étendant approximativement perpendiculairement à la direction d'écoulement, avec une ouverture annulaire centrale (144) adaptée à l'ouverture de diaphragme centrale (134) et avec des fenêtres annulaires (146) adaptées aux fenêtres de diaphragme (136), entourant à chaque fois en partie l'ouverture annulaire centrale.

6. Agencement de compresseur selon l'une quelconque des revendications précédentes, **caractérisé en ce que** le ou les passages d'écoulement (160) sont prévus dans la paroi extérieure de la portion tubulaire (139) de manière à pouvoir être fermés.

7. Agencement de compresseur selon l'une quelconque des revendications précédentes, **caractérisé en ce que** les passages d'écoulement (160) peuvent être fermés ou ouverts partiellement ou complètement de préférence simultanément, par déplacement, en particulier par rotation, d'une partie de recouvrement mobile (162) par rapport au diaphragme fixe (132) dans le canal d'afflux.

8. Agencement de compresseur selon les revendications 4 à 7, **caractérisé en ce que** la partie de fermeture (138) est formée d'une seule pièce avec la partie de recouvrement (162), la partie de recouvrement pénétrant à la manière d'un épaulement de douille dans la portion tubulaire (139) à partir de la partie de fermeture.

9. Agencement de compresseur selon l'une quelconque des revendications 6 à 8, **caractérisé en ce que** l'agencement de compresseur peut être déplacé dans une première position de fonctionnement (I) dans laquelle à la fois la fenêtre de diaphragme (136) et les passages tubulaires (160) sont fermés pour empêcher un écoulement, dans une deuxième position de fonctionnement (II) dans laquelle au moins une, et de préférence toutes les fenêtres de diaphragme (136) sont ouvertes et au moins un et de préférence tous les passages tubulaires (160) sont fermés, et/ou dans une troisième position de fonctionnement (III) dans laquelle au moins une et de préférence toutes les fenêtres de diaphragme (136) sont fermées et au moins un et de préférence tous les passages tubulaires (160) sont ouverts.

10. Agencement de compresseur selon au moins l'une quelconque des revendications précédentes, **caractérisé par** une recirculation de gaz d'échappement (170) par le biais de laquelle du gaz d'échappement peut être introduit dans le canal d'afflux (120) en amont du rotor de compresseur (150) dans la région du dispositif d'ajustement (130), de préférence en aval de la fenêtre de diaphragme (136).

11. Agencement de compresseur selon la revendication 10, **caractérisé en ce que** la recirculation de gaz d'échappement (170) débouche dans le canal de connexion (125).

12. Agencement de compresseur selon la revendication 10 ou 11, **caractérisé en ce que** le dispositif d'ajustement (130) est prévu pour modifier une section transversale d'écoulement entre la recirculation de gaz d'échappement et le rotor de compresseur.

13. Agencement de compresseur selon l'une quelconque des revendications précédentes, **caractérisé par** un rétrécissement en forme d'entonnoir (180) du canal d'afflux (120) en aval du diaphragme (132) et en amont du rotor de compresseur (150), le plus petit diamètre d'écoulement (D) du rétrécissement (180) correspondant de préférence essentiellement au diamètre de la portion tubulaire (139) et/ou étant disposé directement en aval de l'extrémité de la portion tubulaire (139) tournée vers le rotor de compresseur (150), de telle sorte que le rétrécissement (180) délimite le canal de connexion (125) vers l'aval.

14. Agencement de compresseur selon l'une quelconque des revendications précédentes, **caractérisé par** un E-booster à commande électrique pour augmenter une pression de suralimentation pouvant être fournie par l'agencement de compresseur.

15. Moteur à combustion interne comprenant un moteur à combustion, un ligne d'échappement, une ligne de gaz d'échappement, une ligne de gaz frais et un turbocompresseur à gaz d'échappement avec une turbine intégrée dans la ligne de gaz d'échappement et un agencement de compresseur (100) selon l'une quelconque des revendications précédentes intégré dans la ligne de gaz frais.

16. Procédé pour faire fonctionner un moteur à combustion interne selon la revendication 15, qui comprend un agencement de compresseur (100) selon la revendication 10 ou selon l'une quelconque des revendications dépendant de la revendication 10, dans lequel une quantité de flux de gaz d'échappement à travers la recirculation des gaz d'échappement (170) débouchant en amont du rotor de compresseur (150) dans la ligne de gaz frais est ajustée au moyen du dispositif d'ajustement (130) de l'agencement de compresseur et de préférence pas au moyen d'un clapet de gaz d'échappement.
